# EUROPEAN PATENT SPECIFICATION

(11) **EP 3 884 118 B1**
(45) Date of publication and mention of the grant of the patent: **09.08.2023**
(21) Application number: 19813192.2
(22) Date of filing: 25.11.2019
(51) Int. Cl.: E03F 3/06

(54) **PACKER FOR USE IN A METHOD FOR LINING INTERIOR WALLS OF A HOLLOW STRUCTURE, AND ASSOCIATED METHOD**
AUFBLASBARE VORRICHTUNG FÜRS VERKLEIDEN VON INNENFLÄCHEN VON ROHREN
DISPOSITIF GONFLABLE POUR L'INSTALLATION DE DOUBLURE DANS UN TUYAU

(30) Priority: 23.11.2018 NL 2022056
(43) Date of publication of application: 29.09.2021
(73) Proprietor: WN Smitgroep, 1446 TX Purmerend (NL)
(72) Inventor: SMIT, Nicolaas Petrus Frederikus Maria, 1461 DT Zuidoostbeemster (NL)
(74) Representative: Arnold & Siedsma
(86) International application number: PCT/NL2019/050778
(87) International publication number: WO 2020/106157

(56) References cited:
- JP-A- H08 159 363
- JP-U- H08 715
- US-A1- 2002 083 990

## Description

### FIELD OF THE INVENTION

The present invention relates to a packer for use in a method for lining interior walls of a hollow structure that communicates with a pipe through an entrance opening provided in a wall of the hollow structure. A suitable example of such a hollow structure comprises a sewerage pit or manhole. The invention further relates to a method for lining interior walls of the hollow structure in which the packer is used, and to a clamping tool for use in the method.

### BACKGROUND OF THE INVENTION

The present invention is illustrated in the context of renovating a sewerage pit, but the invention is not limited thereto and may be used for renovating other hollow structures such as tanks and wells for instance, in particular underground hollow structures. Nonlimiting examples include hollow structures for holding a fluid, such as fat pits, fuel pits or tanks, gas tanks and sewer manholes, and hollow structures intended to keep a fluid out, such as storage cellars, basements, pumping stations and the like. The hollow structure is supposed to communicate with a pipe through an entrance opening provided in a wall of the hollow structure. The pipe may also exit the hollow structure again, which downstream pipe than communicates with the hollow structure through an exit opening provided in a wall of the hollow structure. In case of a sewerage pit or manhole, the pipe is typically a sewerage pipe or duct that enters the hollow structure at an upstream end of the pipe and leaves the hollow structure again at a downstream end of the pipe, relative to the hollow structure. A pipe communicating with a hollow structure may connect to the hollow structure at a bottom end thereof but the invention is not limited to such pipes.

Lining of the walls of the hollow structure is typically performed for reasons of renovation. Renovation in the context of the present application is meant to denote an adaptation to an existing structure that has at least partly lost (curative renovation) or will at least partly loose (preventive renovation) one of its functions.

The importance of in-situ renovation of underground structures such as sewerage pits is increasing due in part to an ageing sewerage system. A sewerage pit indeed may be subject to corrosion since it frequently comes in contact with strong acids such as biogenic sulfuric acid. Corroded walls and bottom parts may affect the structural integrity of the pit and the pit and its surroundings may as a result become unstable. Water tightness may also be lost and unwanted fluids may leak in the surrounding ground layers or (fresh) water may enter the pit.

A known method for lining walls of a sewerage pit involves applying liner material through an access opening and inside the hollow structure, providing an inflatable bladder within the hollow of the structure and inflating the bladder and the liner material against the wall of the hollow structure, providing a liner curing means such as heated water inside the bladder, and curing an as yet uncured resin composition of the liner material.

JP 8-159363 A discloses a sealer comprising a curing agent in the form of a heater. The sealer has a rubber flexible part in between end parts. A repair material is pressed against an inner wall of a pipe by inflating the rubber part and cured with the curing agent. JP 8-159363 A lacks an outer coating of the flexible part facing the exterior of the sealer. The repair material further is not part of the sealer itself. Also, D1 lacks spacing means that keep the end parts at a distance from each other in an axial direction of the sealer, wherein the spacing means are configured to adjust the distance between the end parts.

It has turned out that a pipe communicating with the hollow structure through an entrance opening provided in a wall of the hollow structure causes problems in carrying out the known method. For instance, pressurizing the bladder and the liner material tends to push liner material inside the pipe causing tearing of this material before it has even cured. Frequently therefore, repair work has to be done by hand in order to provide the pipe end that exits in the hollow structure with a watertight lining.

There is a need therefore for an improved method for lining interior walls of a hollow structure such as a sewerage pit which at least in part obviates the disadvantages of the known method.

### SUMMARY OF THE INVENTION

A first aspect of the invention relates to a packer in accordance with claim 1. The packer is provided for use in a method for lining interior walls of a hollow structure that communicates with a pipe through an entrance opening provided in a wall of the hollow structure.

A second aspect of the invention sees to a method of lining interior walls of said hollow structure that makes use of the invented packer.

According to the invention, the packer comprises rigid end parts and a flexible part that connects to the rigid parts, wherein the flexible part comprises an inner covering layer facing the inside of the packer, a removable outer covering layer facing the outside of the packer, and a packer material sheet of reinforcing fibers and a curable resin composition provided in between the inner and outer covering layer, wherein the packer further comprises a means for pressurizing the inside of the packer, and a curing means provided within the inside of the packer for curing the packer resin composition. The curable resin composition is provided within the inner and removable outer covering layer which prevents premature curing and exposure to the resin composition and other repair materials.

The invented packer is adjustable such that it may be inflated into a plurality of different shapes, having various diameters and adjustable lengths. The packer may also comprise various fibrous composite materials to suit multiple sewer pipes.

The rigid end parts are provided to shape the packer for its use. Indeed, as will be elucidated further below, the packer is to be inserted into a pipe's end, and the rigid parts are dimensioned such that this is possible. The rigid end parts may also carry packer components such as the means for pressurizing the inside of the packer, and the packer curing means.

The flexible part of the packer is needed to urge the packer material sheet or sheets against a wall of the pipe when pressurizing the inside of the packer.

In order to facilitate placement of the packer inside a pipe end, the packer according to the invention further comprises spacing means that keep the rigid parts at a distance from each other in an axial direction of the packer. In an embodiment wherein the end parts comprise circular end plates, the packer may thus take the shape of a cylindrical body that substantially conforms to a cylindrically shaped interior pipe end. The packer is in this embodiment positioned inside the pipe end with its axial direction about parallel to an axial direction of the pipe end. The end plates may have another shape than circular, for instance ellipsoidal, or polygonal, or any other shape that is required by the pipe end shape. The end plates of the packer in an embodiment may even differ in shape from each other.

In order to accommodate a variety of axial distances along which the packer may be inserted inside a pipe end, the packer according to the invention comprises spacing means that are configured to adjust the distance between the rigid parts. This may for instance be embodied by threaded rods that extend from an end plate to another end plate.

In an embodiment of the invention, a rigid end part of the packer is larger than a smaller rigid end part provided at the other end of the packer. This embodiment is particularly useful in a method for providing a pipe end with a hat section, as will be disclosed further below.

In case the rigid end parts are plate-like structures, the larger rigid end part may have a larger transverse dimension than the smaller rigid end part, in an embodiment. Preferably, the smaller rigid end part is configured to be insertable in a pipe end, whereas the larger rigid end part is not.

Another useful embodiment of the invention provides a packer the curing means of which comprises a source of (electrical) heat, light and/or sound to which a power line may be connected. The connection to the power line may be provided in the flexible part, but providing said connection in the rigid end parts is favoured. The power line itself may in use be connected to the packer and at another end to a suitable power source. In use the power line or cord that exits the packer is typically lead along a wall of the hollow structure to a power source provided outside the hollow structure. Liner material provided onto the walls of the hollow structure is typically also provided onto the power cord. In an embodiment, the power cord remains in the renovated hollow structure after having hardened the liner and packer material sheets.

A particularly useful embodiment provides a packer wherein the packer curable resin composition is photo-curable and the packer curing means comprises a source of UV-light. When using this embodiment, a packer wherein at least the inner covering layer of the flexible part is substantially permeable to the packer curing means, an in particular to UV-light, is preferred.

Another preferred embodiment provides a packer wherein at least the outer covering layer of the flexible part is substantially impermeable to the packer curing means. This prevents or at least hinders premature curing of the packer resin composition.

The packer may be pressurized to inflate at least the flexible part thereof by any means known in the art. The packer may for instance be filled with water, air of with another fluid. A packer according to a preferred embodiment is characterized in that the means for pressurizing the inside of the packer comprises a valve onto which a pressure line may be fitted. The pressure line itself may in use be connected to the packer and at another end to a suitable pressure source, such as a pump unit for instance.

Yet another useful embodiment of the packer has a flexible part, the inner covering layer whereof comprises reinforcing fibers, at least in a connection area to the rigid parts. The transition between the rigid end parts and the flexible part may in use be subject to relatively high stresses, and the present embodiment may increase the service life of the packer. The inner covering layer may also have an increased thickness in the connection area relative to the thickness of the inner covering layer in areas remote from the connection area.

It should be noted that the packer may also comprise a rigid inner covering layer facing the inside of the packer, such as a polymer tube or pipe section, for instance a polyvinylchloride pipe section. The rigid inner covering layer provides a space through which a fluid, such as sewage water, may freely flow. The two rigid end parts of the packer are then also provided with an opening, or comprise the two end sections of the tube or pipe section acting as the rigid inner covering layer. In order not to inhibit the free flow through the packer, the curing means, according to any embodiment described in this disclosure, may then be provided around the rigid inner covering layer. For instance, UV-led lamps may be provided around the rigid inner covering layer to cure the resin composition of the packer material sheets provided between the rigid inner covering layer and the outer flexible covering layer facing the outside of the packer. This embodiment of the packer may be used with advantage when flow through a pipe to be renovated cannot be discontinued, or only for a short time.

According to another aspect of the invention, the packer is advantageously used in a method according to claim 9.

A hat section provided in a pipe is meant to denote a hardened structure that comprises a main part in the shape of the pipe and covering an end part of the pipe, and a hat rim part that is configured to cover a wall surface extending around the entrance opening of the pipe.

A preferred embodiment of the method for providing a pipe with a hat section has the feature that a clamping tool is provided inside the pipe between the plugging means and the packer, in order to prevent the packer from shifting inside the pipe.

In yet another preferred embodiment of the method, the packer is removed after curing the packer resin composition. With this is obviously meant that all parts of the packer are removed except the hardened fiber-reinforced resin composition of the packer.

It should be noted that the method is not limited to providing a hat section to one pipe only, and a plurality of pipes may exit into the hollow structure and each be provided with a hat section according to the method.

According to yet another aspect of the invention, a method according to claim 11 is provided.

According to yet another aspect of the invention, the packer is advantageously used in a method according to claim 12.

The invented method allows lining interior walls of a hollow structure and walls of a pipe that communicates with the hollow structure through an entrance opening provided in a wall of the hollow structure together in an efficient and reliable way. Moreover, the lining of the hollow structure and pipe walls is substantially watertight.

The invention is in particular advantageous in an embodiment of the method wherein an underground hollow structure is renovated, more preferably a sewerage pit.

With the wording `substantial' or 'substantially' is meant in the context of the present application at least 70% of the indicated property, more preferably at least 80%, even more preferably at least 90%, and most preferably at least 95% of the indicated property.

The reinforcing fibers and the curable resin composition of the liner material may be applied against the wall by any means known in the art. They may for instance be applied by spraying. In a spraying operation, reinforcing fibers of some length are projected from a spray gun together with a resin composition against a substrate such as the wall of the structure. They accumulate at the substrate as a composite material covering of the substrate. After cure, the material covering provides strength and stiffness. Spraying of reinforcing fibers and a resin composition onto a surface is known per se but mechanical and other properties tend to be less than when other fiber reinforced composite material forms are used. Providing reinforcing fibers and a curable resin composition through the access opening and against a wall of the hollow structure by spraying, and inflating the pressure means against the wall yields a relatively smooth and even surface of the covering is obtained which benefits durability and further allows an improved control of the thickness of the covering. Inspection of the covering for defects is also facilitated.

The reinforcing fibers and the curable resin composition of the liner may also be applied in the form of a plurality of material sheets, comprising the liner's reinforcing fibers and curable resin composition.

The reinforcing fibers and the curable resin composition of the liner may also be provided in the form of an inflatable preform that comprises the liner material sheets, which preform is configured to substantially conform to the interior shape of the hollow structure when inflated outside the hollow structure. A suitable preform comprises an envelope comprising an inner covering layer facing the inside of the preform and an outer covering layer facing the outside of the preform, and in between the liner's reinforcing fibers and curable resin composition.

According to the invention, the packer is positioned with the outer covering layer removed inside the pipe's upstream end and downstream of the plugging means, such that an end part of the packer substantially covers the entrance opening of the pipe's upstream end. The pipe may enter the hollow structure and leave the hollow structure again at a downstream end of the pipe. It is advantageous in such case to provide an embodiment of the method that further provides a packer with the outer covering layer removed inside the pipe's downstream end and upstream of the plugging means, such that an end part of the packer substantially covers the exit opening of the downstream pipe end (through which exit opening water may for instance leave the hollow structure via the downstream pipe end).

It is advantageous to provide the packer with fiber reinforced material sheets that may extend beyond the length of the packer, at least at the side of the packer that is adjacent to the hollow structure, after having removed the outer covering layer of the packer. Such packer material sheet extensions are advantageous for the following reasons. After having provided a packer with the outer covering layer removed inside the pipe's upstream end and downstream of the plugging means and the optional clamping means, such that an end part of the packer substantially covers the entrance opening, and after having provided liner material through the access opening and inside the hollow structure while leaving the end part of the installed packer uncovered, this embodiment allows to produce an overlap of the packer material sheets with the liner material by for instance folding the packer material sheet extensions against the liner provided on the wall of the hollow structure. This provides a good connection between packer material sheets and liner material sheets.

A step of the method involves pressurizing the interior hollow of the hollow structure. In order to prevent the packer to be pushed further into the pipe end in which it is provided, an embodiment of the invention provides a method wherein a clamping tool is provided inside the pipe between the plugging means and the packer, both provided in the pipe. The clamping tool in an embodiment comprises an end plate, provided at one end of a central shaft. A mechanism is attached to the end plate and is configured to fix the clamping tool against a wall of the pipe or tubing. In an embodiment, the mechanism comprises three assemblies of shearing members, one member of each assembly at one end being hingedly connected to the end plate. Preferably, pivot bearings are used on the axis spindle at the end plate and the moving axle bearing attaching the hinging spindle in order to avoid stresses in all directions during positioning. The members can rotate or shear around a common hinge in order to bring the mechanism from a (partly) folded-in position to a folded-out position in which outer members of the mechanism may push against a wall of the pipe end or tubing to fix the clamping tool inside the pipe.

The clamping tool preferably has three assemblies of shearing members in order to accommodate packers with non-circular end plates (for instance ellipsoidal), since, preferably, the end plate of the packer should not move from its position. Such position of the end plate facing the hollow structure is adjacent/level to the hollow structure wall. The packer material sheets preferably extend into the hollow structure over a distance of at least 10 cm to allow it to be cut in and folded and tacked to the liner material provided against the wall of the hollow structure.

In an embodiment of the method, the clamping tool is brought inside the pipe end with the central shaft aligned along an axial direction of the pipe end, and the mechanism is operated to secure the tool against the wall of the pipe, for instance by bringing the outer members against the pipe wall. The end plate of the tool is typically located over some distance in the pipe end away from the entrance or exit opening provided in the wall of the hollow structure, allowing tight positioning of the packer such that the proximal end of the packer is adjacent /level with the sewage pit wall. After having fixed the clamping tool inside the pipe end, a packer is then provided in the pipe end against the plate of the clamping tool. This will prevent pushing the packer further into the pipe end when the hollow structure is pressurized.

Curing the resin compositions of the liner material and the packer material yields a solidified liner of the hollow structure walls and also of the pipe wall. The cured material once cured provides a watertight and preferably load-bearing structure within the hollow structure and within the pipe end. The cured material may be provided with a suitable top-coat, which may for instance increase the chemical resistance of the structure.

A preferred embodiment relates to a method wherein the packer is removed after curing the packer resin composition, and more preferably after curing the liner resin composition. Removing the packer may be readily done since the rigid end part of the packer is not covered by the liner material. Pulling the packer out of the pipe end through the entrance or exit opening involves separating the packer's inner covering layer form the cured fiber reinforced material that adheres to the pipe wall. In other words, all parts of the packer are removed except the packer's material that is left behind inside the pipe. A removed packer may be provided with material sheets again and covered with an outer covering layer for further use. The power line used for powering the curing means of the packer may be removed as well but may also be left behind.

Another embodiment of the invention provides a method wherein the plugging means is removed after curing the liner and packer resin compositions, preferably after having removed the used packer. An optional clamping tool provided inside the pipe end may also be removed through the same entrance or exit opening.

The covering layers of the packer and/or optional preform may comprise any suitable material as long as this material allows inflating the flexible part of the packer and/or the preform into a shape that allows putting pressure onto the wall of the pipe end and/or hollow structure. A covering layer may for instance comprise a polymeric film or a rubber sheet.

The liner material and/or packer material sheet comprise reinforcing fibers and/or particles that are embedded in a matrix resin composition, which can either be thermosetting or thermoplastic, but is preferably thermosetting.

The number of material sheets provided in the packer may range from one to a plurality of sheets, wherein the plurality of sheets may partly overlap each other. Loading the packer with fibrous material is preferably done with overlap to adjust for positioning and subsequent inflation of the packer and prevent gapping of the lining material sheets. This may for instance require an overlap of about 3% of the circumference or at least about 3 cm of overlap. Fixation of the lining material sheets on the inner covering layer of the packer after having removed the outer covering layer may be done by any means, for instance by tearable tape leaving a substantial exposure of the material sheets of the lining to the sewage pipe inner surface for maximal bonding. In case there is no suitable material in the sewage pipe that allows for bonding the packer material sheets to it, a foil may also be used to keep the lining material sheets in place on the inner covering layer of the packer.

An embodiment of the invention provides a method wherein the curable resin composition of the optional liner material sheets and/or the packer material sheets are partially cured before providing them against the wall of the hollow structure and pipe respectively. This partial cure may be done on site but is preferably carried out off site, for instance in a separate material sheet or packer factory.

Uncured thermosetting resin compositions typically comprise constituents such as monomers and a hardener, which react together to produce a cross-linked resin after cure. Other thermosetting resin compositions may comprise oligomer or polymer molecular chains of some length dissolved in a reactive solvent, such as styrene. The reactive solvent combines with the molecular chains when initiated to form a cross-linked network. The thermosetting resin composition may be selected such that curing occurs at room temperature or at higher temperatures, typically ranging between 80 and 200°C. During curing, the constituents of a resin mixture react and the viscosity of the mixture increases to infinity while forming a cross-linked solid resin. After curing, a thermosetting resin exhibits a glass transition temperature, above which considerable softening of the thermosetting resin occurs and the thermosetting resin behaves like a rubber. A post-cure may be used to increase the glass transition temperature and obtain a substantially complete degree of cure or full cure.

According to an embodiment of the invention, the curable resin composition of the liner and/or packer material sheets is partially cured such that it still comprises reactive moieties. A partial cure is defined as any degree of cure that differs from zero and from a fully cured state. Further, the degree of partial cure is controlled in the sense that the resin composition may reach a stable state at a storage temperature during a storage time period of some length, which is at least 1 day at room temperature, more preferably at least 2 weeks at 10°C. The degree of cure of the thermosetting resin composition may be established according to well known standard practices. A suitable and widely used technique measures (changes in) enthalpy using Differential Scanning Calorimetry (DSC). The degree or extent of cure is defined as the change in enthalpy that has occurred, compared to the total change of enthalpy of a complete reaction (a substantially full cure or 100% degree of cure). The degree of cure in the partly cured material sheets of the packer and/or the optional liner preform preferably ranges between 5-50%, more preferably between 10-40%, and most preferably between 15-35%.

The curable resin composition, for instance when comprising epoxide moieties, may be B-staged. The wording "B-staged" as employed herein designates that partial curing (partial crosslinking) of the thermosetting resin composition has occurred. The "B-stage" of a thermosetting resin composition is well known to one skilled in the art.

In a useful embodiment of the packer material sheet, the curable resin composition is stable at a temperature of -10°C. In such embodiment, the resin will not substantially cure (change its degree of cure) at a temperature of -10°C for at least one day, more preferably for at least one week, even more preferably for at least one month, even more preferably for at least three months, and most preferably for at least six months. In other useful embodiments, the curable resin composition is stable at a temperature of -5°C, more preferably at a temperature of 0°C, even more preferably at a temperature of 5°C, even more preferably at a temperature of 10°C, even more preferably at a temperature of 15°C.

The material sheet used in the packer and/or in the liner may comprise a thermosetting resin composition such as an epoxy, unsaturated polyester, phenolic, polyurethane, or bismaleimid resin/hardener mixture, or combinations thereof, such as two-component systems based on thermosetting urethane. A preferred embodiment of the material sheet however comprises an unsaturated polyester or vinyl-ester resin/hardener mixture.

According to a preferred embodiment, the resin composition of the packer material sheet comprises a thickening agent and the resin composition is thickened in a controlled way. Thickened unsaturated polyester or vinylester resins are particularly preferred. Chemical thickening involves adding thickening agents to the resin composition which cause an increase in the molecular weight of the polymer chains in a controlled way. This means that the resin's viscosity as a result of the chemical thickening rises up to a pre-determined viscosity plateau where it levels off and stays for a prolonged period of time. The thickened resin of the materials sheets (and preform in appropriate embodiments) therefore exhibits an increased yet controlled viscosity. A thickened resin is typically not cross-linked and requires cross-linking to occur during cure. Thickening agents are known to a person skilled in the art and comprise for example oxides and hydroxides of the metals of groups I, II and III of the Periodic System. Examples of suitable thickeners comprise oxides or hydroxides of magnesium, lithium, calcium and/or aluminum. Preferably use is made of magnesium oxide. Examples of suitable thickening additives are vinyl polymers containing carboxyl groups, or semi-esters of a polyether polyol with a dicarboxylic anhydride. It is also possible to use a polyisocyanate, optionally combined with a metal oxide or metal hydroxide.

The thickening agent is used in amounts of between 0.1 and 10 wt.%, relative to the amount of the unsaturated polyester or vinylester component in the resin composition.

The resin composition may further contain fillers commonly used in the art, and may further comprise anti-shrink compounds, such as for example polyvinyl acetate, ethylene vinyl acetate, polystyrene, polyacrylates, such as for example polymethyl methacrylate, saturated polyesters, polyethylene, polyurethane and rubbers based on butadiene and styrene. Such anti-shrink compounds are usually referred to as 'low profile additives' (LPA). The resin composition may also comprise release agents, such as paraffin waxes and stearates for instance.

The material sheet of the packer and the optional preform contains inorganic and/or organic reinforcing fibers, preferably arranged in the form of a woven fabric and/or UD fabric. The material sheets of the packer and the liner may also comprise chopped fibers. Additional short reinforcing fibers may be present. Suitable reinforcing fibers in the woven fabric and/or UD fabric comprise glass fibers, carbon fibers, cellulose, sisal and jute fibers and steel fibers. It is also possible to use synthetic organic fibers, such as for example fibers based on drawn polyethylene, polyamide and polycarbonate. The reinforcing fibers and the material sheet of the packer preferably comprise glass fibers.

A suitable amount of reinforcing fibers in the material sheet of the packer or the optional preform ranges between 5 and 90 wt.%, relative to the total weight of the material sheet, more preferably between 20 and 85 wt.%, even more preferably between 30 and 80 wt.%, and most preferably between 50 and 70 wt.%, relative to the total weight of the material sheet.

The number of layers in the material sheet of the packer may be chosen at will, and may for instance comprise 2 to 4 layers, more preferably 2 or 3 layers, and most preferably 2 layers. In case each layer is a biaxial 0/90 fabric, the layers are preferably arranged symmetrically with respect to a mid-plane of the material sheet. The areal weight of the material sheet may also chosen at will but is preferably between 500 - 1200 g/m2, more preferably between 600 - 1100 g/m2, and most preferably between 700 - 1000 g/m2.

Curing of the resin composition of the packer and/or of the liner material is preferably initiated by an initiator. A particularly preferred class of initiators comprises the photo-initiators. Photo-initiators are molecules adapted to create reactive species such as free radicals, cations and anions when exposed to radiation in the UV or visible wave length range. Suitable examples include but are not limited to azobisisobutyronitrile, benzoyl peroxide, and camphorquinone.

Good curing behaviour is obtained in an embodiment wherein the curing means of the liner and/or of the packer comprises a UV-light source having a wave length between 10 and 420 nm. It is advantageous to concentrate the emitted UV-light, preferably such that at least 50% of the UV-light is within a bandwidth of ± 50 nm of a peak wavelength between 300 and 400 nm. A UV-light emitter having the claimed narrow wave length distribution may be used, but it is also possible to use a UV light source having a wider wavelength distribution and filtering the light to obtain the claimed narrow wave length distribution. Although the power of the UV-light source may be varied within a large range, a preferred power of the UV-light source ranges from 0.5-100 W/cm2, more preferably from 1-30 W/cm2, and most preferably from 3-20 W/cm2. UV devices suitable for producing the UV light required for embodiments of the invention include UV-LED lamps.

Another preferred embodiment of the method uses a cover such that the access opening to the hollow structure is covered - yet accessible - by the cover that is substantially impermeable to the packer and/or liner curing means. A practical embodiment uses a tent having walls that are substantially impermeable to the packer and/or liner curing means, in particular to UV-light.

A convenient inflatable bladder comprises a rubber bladder, for instance chosen from the group of natural rubbers, isoprene rubbers, butadiene rubbers, styrene butadiene copolymer rubbers, acrylonitrile butadiene copolymer rubbers, and the like, a natural rubber latex being particularly preferred, due in part to its outstanding elongation, tear and recovery properties. The inflatable bladder preferably is permeable to the liner curing means, for instance substantially translucent to UV-light in case of an embodiment using a photo-curable resin composition. Such a permeable inflatable bladder at least allows the action of the curing means to occur in the curable resin composition of the liner material substantially unhindered.

According to the invention a curing means is provided within the hollow of the structure for curing the liner resin composition, as well as within the packer for curing the packer resin composition. Curing the resin compositions may adhere the liner material and packer material sheets to the wall of the hollow structure and pipe respectively.

It is explicitly mentioned that the embodiments disclosed in the present application may be combined in any possible combination of these embodiments, and that each separate embodiment may be the subject of a divisional application.

### BRIEF DESCRIPTION OF THE FIGURES

The invention will now be described in more detail by way of example, without however being limited thereto and with reference to the accompanying figures in which:
Figure 1 schematically illustrates a cross-section of a sewerage pit to be renovated;
Figure 2 schematically illustrates a cross-section of a step of the method in accordance with an embodiment of the invention;
Figure 3 schematically illustrates a cross-section of another step of the method in accordance with an embodiment of the invention;
Figure 4 schematically illustrates a side view of yet another step of the method in accordance with an embodiment of the invention;
Figure 5 schematically illustrates a top view of yet another step of the method in accordance with an embodiment of the invention;
Figure 6 schematically illustrates a cross-section of yet another step of the method in accordance with an embodiment of the invention;
Figure 7 schematically illustrates a cross-section of yet another step of the method in accordance with an embodiment of the invention;
Figure 8 schematically illustrates a cross-section of yet another step of the method in accordance with an embodiment of the invention;
Figures 9A, 9B and 9C schematically illustrate embodiments of a clamping tool that can be used in the method to temporarily close off openings in a wall of the structure;
Figure 10 schematically illustrates a cross-section of a packer in accordance with an embodiment of the invention;
Figure 11 schematically illustrates a cross-section of yet another step of the method in accordance with an embodiment of the invention; and finally
Figures 12A-12C schematically illustrate a side view of method steps for providing a pipe with a hat section in accordance with an embodiment of the invention.

### DESCRIPTION OF PREFERRED EMBODIMENTS

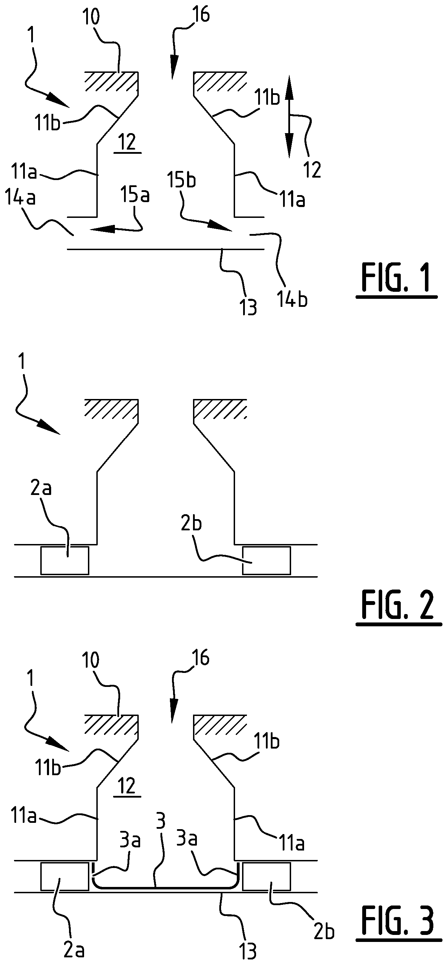

Referring to figure 1 is shown a cross-section of a sewerage pit, walls (11a, 11b) of which need to be lined for renovation. The sewerage pit 1 is situated below ground-level 10 and has a number of walls (11a, 11b) and a bottom 13 that enclose a hollow volume 12. Some walls 11a extend about vertically upwards, while other walls 11b show an angle with the vertical direction 12. At bottoms height, the walls 11a of the pit 1 are provided with openings 15 that give access to sewerage pipes 14. At the top of the pit 1, an access opening 16 is provided through which the inner hollow 12 can be entered. The access opening 16 may be present already or may be provided as part of the method.

An upstream pipe 14a communicates with the hollow 12 of the sewerage pit or manhole through an entrance opening 15a provided in the wall 11a of the hollow structure, whereas a downstream pipe 14b communicates with the hollow 12 of the sewerage pit or manhole through an exit opening 15b provided in the opposite wall 11a of the hollow structure.

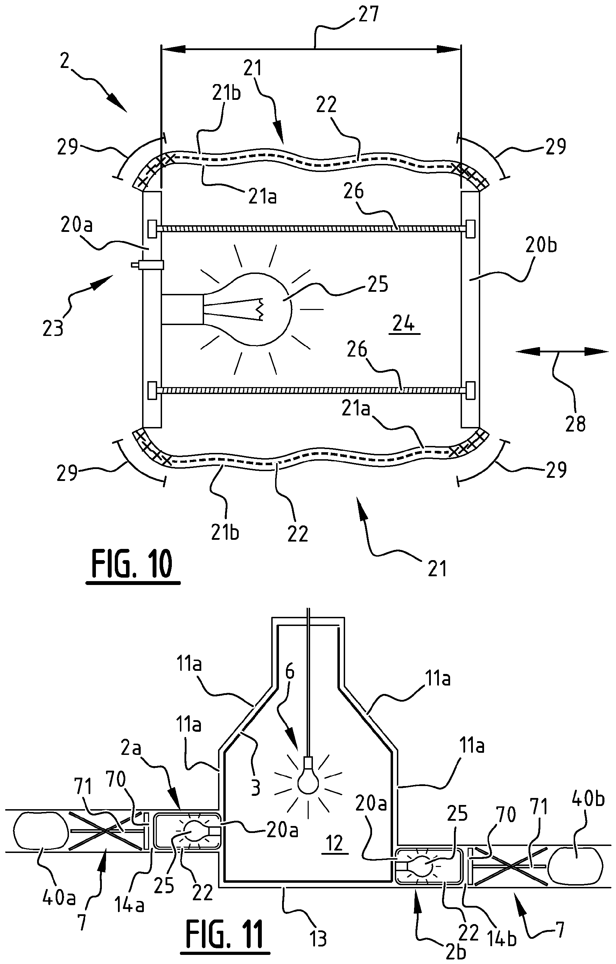

As illustrated in figure 2, the access openings 15 to the sewerage pipes 14 are provided with inflatable packers 2, shown in more detail in figure 10. This figure 10 shows a packer 2 that comprises two rigid end parts in the form of rigid circular end plates (20a, 20b) and a flexible part 21 that connects and bridges the rigid end plates (20a, 20b). The rigid end plates (20a, 20) may be made of any material such as wood, metal, fiber reinforced composite material, polymer, and is preferably airtight, since the packer needs to be inflated in the method The flexible part 21 comprises an inner covering layer 21a, facing the inside of the packer 2, an outer covering layer facing 21b, the outside of the packer 2, and a packer material sheet 22 of reinforcing fibers and a photo-curable resin composition provided in between the inner and outer covering layers (21a, 21b). In the embodiment shown, the outer covering layer 21b is substantially impermeable to UV-light to prevent untimely cure of the photo-curable resin composition of the packer 2. The packer 2 further comprises a valve 23 provided in the rigid end plate 20a, to which valve 23 a pressure line (not shown) may be connected for pressurizing the inside volume 24 of the packer 2. The packer 2 is further provided at the inside with a curing means which in the embodiment shown comprises a UV-led light 25 connected to the rigid end plate 20a. The inner covering layer 21a is translucent to UV-light which allows curing the resin composition of the material sheet 22. The UV-led light 25 may be connected to a power line (not shown).

The packer 2 further comprising spacing means in the form of threaded rods 26 that keep the rigid end plates (20a, 20b) at a distance 27 from each other in an axial direction 28 of the packer 2 by being connected at both ends to said end plates (20a, 20b). The spacing means 26 may be configured to adjust the distance 27 between the rigid end plates (20a, 20b). The inner covering layer 21a comprises reinforcing fibers in connection areas 29 to the rigid end plates (20a, 20b).

As shown in detail in figure 11 for instance, both upstream and downstream pipe ends (14a, 14b) are plugged with plugging means (40a, 40b) to prevent ingress of water. The plugging means 40 may be embodied in any suitable way and for instance comprise inflatable or inflated balloons that are urged against a sidewall of the pipe ends (14a, 14b) so that water or other fluids experience difficulties in entering the hollow 12 of the hollow structure. It may be necessary to pump away any remaining water at the bottom of the hollow 12 before proceeding with other method steps.

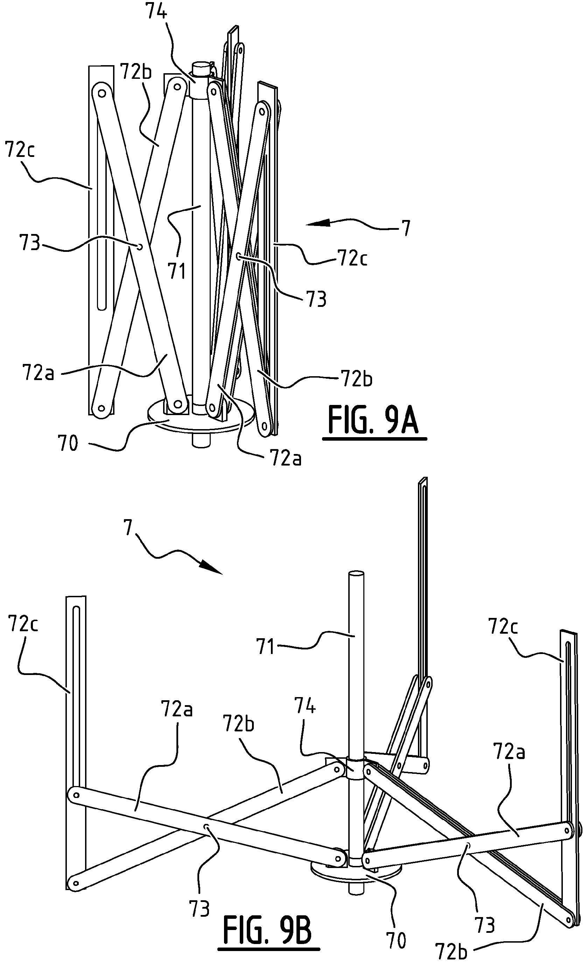

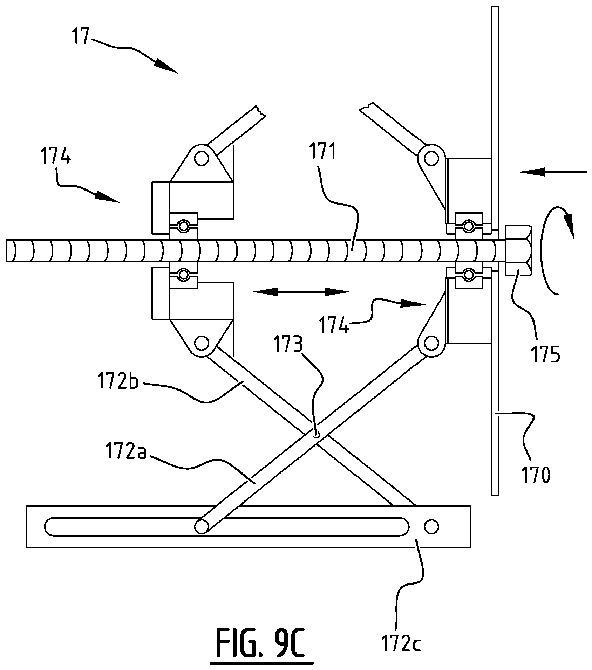

After having provided the plugging means 4 into the pipe ends 14, a clamping tool 7 may be used to prevent the packers 2 from being pushed further into the pipe ends 14, or to prevent leakage. A preferred clamping tool 7 is shown in figures 9A and 9B. The tool 7 comprises an end plate 70, provided at one end of a central shaft 71. A mechanism (72a, 72b, 72c) is attached to the end plate 70 and comprises three assemblies of shearing members (72a, 72b). One member 72a of each assembly is at one end hingedly connected to the end plate 70. The members (72a, 72b) can rotate or shear around a common hinge 73 in order to bring the mechanism from a (partly) folded-in position (figure 9A) to a folded-out position (figure 9B) in which outer members 72c may push against a wall of a pipe end 14, as shown in figure 11. In this process, a ring 74, common to members 72b shifts downwards along the central shaft 71. Another even more preferred clamping tool 7 is shown in figure 9C. The tool 17 comprises an end plate 170, provided at one end of a central spindle shaft 171. A mechanism (172a, 172b, 172c) is attached to the end plate 170 and comprises three assemblies of shearing members (172a, 172b). One member 172a of each assembly is at one end hingedly connected to the end plate 170 by hinges 174 comprising a pivot bearing. The pivot bearings 174 are positioned on the spindle shaft 171 at the end plate 171 and at a moving end and prevent stresses to occur in all directions during positioning. The members (172a, 172b) can rotate or shear around a common hinge 173 by turning the spindle knob 175 in order to bring the mechanism from a (partly) folded-in position to a folded-out position in which outer members 172c may push against a wall of a pipe end 14, as shown in figure 11.

A packer (2a, 2b) is then installed into each of pipe ends 14a and 14b such that their end plates 20a substantially cover the entrance opening 15a and exit opening 15b of the pipe ends 14a and 14b respectively. The packers 2 need not be inflated in this phase of the method.

In a next step of the method, as shown in figure 3 for instance, a number of materials sheets 3 may be provided onto the bottom 13 of the pit 1. The materials sheets 3 comprise reinforcing E-glass fibres embedded in a thickened unsaturated polyester resin. The E-glass fibers are arranged in the form of two layers, each layer comprising a 0/90 UD fabric. The layers are arranged symmetrically with respect to a mid plane and enclosed within a black foil to avoid further curing during storage. The black foil is removed from the material sheets 3 before applying them to the bottom 13 of the pit 1. The material sheets 3 are applied to the bottom in an overlapping fashion to avoid any gaps between the material sheets 3. Side flaps 3a of the material sheets 3 are folded upwards to cover a lower part of the walls 11a.

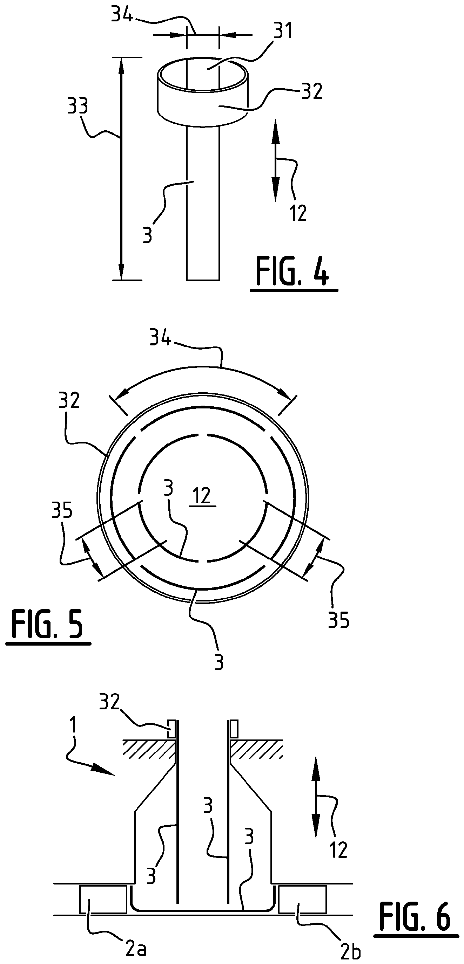

A next step of the method involves providing further material sheets 3 through the access opening 16 while holding an upper edge 31 of the material sheets 3 with securing means in the form of a steel ring 32, as shown in figure 4. The material sheets 3 are secured to the ring 32 and hang down under the influence of gravity forces that act in the vertical direction 12. Alternatively, a preform 40 comprising the reinforcing fibers and resin composition may be provided through the access opening 16.

As shown in the top view of figure 5, a number of materials sheets 3 is brought down in an overlapping fashion wherein edge parts of adjacent material sheets 3 overlap over an overlapping distance 35. The overlapping distance 35 may be the same for all sheets 3 or may differ between pair of sheets 3. The material sheets 3 are provided such that they leave an end part of the packer installed in a pipe end 14 and preferably in both pipe ends (14a, 14b) uncovered.

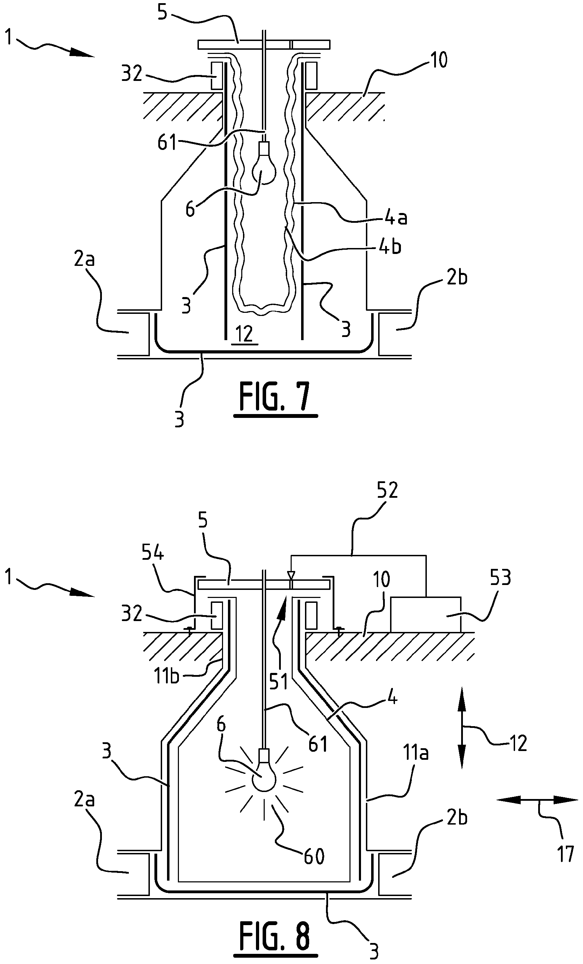

An inflatable latex bladder 4 that may comprise two walls (4a, 4b) is lowered inside the hollow 12 of the pit 1 in a deflated or partly deflated state. This step is shown in figure 7, which also illustrates that a cover 5 is applied on top of the ring 32 to be able to pressurize the hollow 12 below the cover 5. An upper rim 41 of the bladder 4 is clamped between the ring 32 and the cover plate 5. Please note that applying a single walled bladder 4, such as shown in figure 8, is also possible.

As shown in figure 8, the bladder 4 is then inflated by pressurizing the air within the inside of the bladder 4 such that the bladder 4 comes to lay against the material sheets 3 and the walls 11 of the pit 1. Pressurizing the air may be performed by a pressure line 52, connected to an opening 51 in the cover 5. The pressure line 51 is at another end attached to a pump 53. The cover 5 may be held against the ring 32 by any means, such as by brackets 54. The cover may be provided with a transparent air tight loop hole (not shown) in order to enable observing the inner cavity of the structure. The cover 5 allows pressurizing the inside of the bladder 4, preferably to a pressure of between 0,1 and 1 bar above atmospheric pressure.

At about the same time, the packers 2 provided in the pipe ends 14 are also inflated in order to urge their flexible parts 21 against the inner wall of the pipe ends 14.

A curing means in the form of a lamp 6 emitting UV-light 60 is then lowered inside the hollow 12 and inside the bladder 4 for curing the resin composition of the material sheets 3. To this end, the UV-light emitting lamp is held by a rope 61 or other manipulating device, such as a bar for instance.

In a further step, curing of the resin composition in the material sheets 3 takes place under the action of the UV-light emitting lamp 6 to adhere the material sheets 3 to the walls 11 of the pit 1. Before, during and/or after cure, the bladder 4 is inflated and applies pressure against the walls 11. The wall (or walls) of the inflatable bladder 4 is substantially translucent to UV-light to prevent incomplete or too slow cure. A postcure may be applied, if desired. The lamp 6 may be moved in the process of curing within the hollow 12 of the pit 1 or a plurality of lamps 6 may be used.

At about the same time, the UV-led lamps 25 provided in the packers 2 are also activated to cure the photo-curable resin composition of the packer's materials sheets.

After cure is substantially complete, the packers 2 are typically removed from the pipe ends 14, where after the clamping tools 7 may be removed from the pipe ends 14, and subsequently also the plugging means 40.

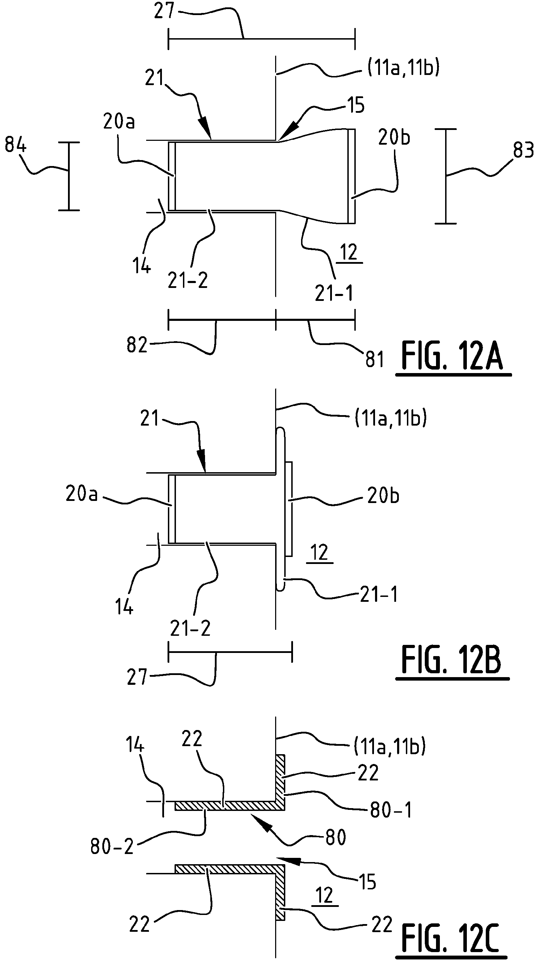

With reference to figures 12a to 12C, steps are shown of a method for providing a pipe end 14 with a hat section 80. The interior walls (11a, 11b) of the hollow structure 12 communicate with the pipe end 14 through an entrance opening 15 provided in a wall (11a, 11b) of the hollow structure 12. As has been described already above, first, an access opening 16 is provided to the hollow structure, and plugging means 4 inserted into the pipe ends 14. Optionally, after having provided the plugging means 4 into the pipe ends 14, a clamping tool 7 may be used to prevent the packer 2 from being pushed further into the pipe end 14, or to prevent leakage. Please note that details of the plugging means 4, the optional clamping tool 17 and the packer 2 are not shown in figures 12A-12C, for clarity.

A packer 2 is then provided with the outer covering layer 21b removed inside the pipe's upstream end 14 and downstream of the plugging means 4 and the optional clamping tool 17 (not shown). This is done such that a part 21-1 of the packer 2 sticks out of the pipe end 14 over some length 81 to provide a rigid end part 20b of the packer 2 within the hollow structure 12. The packer 2 is then inflated, as shown in figure 12A, to provide the packer material sheets 22 of a part 21-2 of the packer 2 within the pipe end 14 against a wall (14a, 14b) of the pipe end 14 over a distance 82, and deform the flexible part 21-1 of the packer 2 that sticks out of the pipe. The diameter 83 of a larger rigid end part 20b is larger than the diameter 84 of a smaller rigid end part 20a, the latter fitting inside the pipe end 14. Both end parts (20a, 20b) are circular plates in the embodiment shown.

As shown in figure 12B, the distance 27 between the rigid end parts (20a, 20b) of the packer 2 is then reduced with the spacing means 26 (see figure 10) to bring the rigid end part 20b that is provided within the hollow structure 12 towards the pipe end 14 and the interior wall (11a, 11b) around the entrance opening 15. This causes the flexible part 21-1 of the packer 2 that sticks out of the pipe end 14 to deform into a mushroom shape between the rigid end part 20b that is provided within the hollow structure 12 and the interior wall (11a, 11b) around the entrance opening 15. This deformation provides a substantially homogeneous pressure onto the wall part (11a, 11b) provided around the entrance opening 15.

In a last step, referring to figure 12C, the packer curing means 25 (not shown) are activated to cure the packer resin composition and harden the packer material sheets 22 to form the hat section 80 after removal of the packer 2. The latter comprises a main part 80-2 that substantially conforms to the pipe end 14, and a hat rim part 80-1 that covers a wall part (11a, 11b) around the entrance opening 15.

After a hat section 80 has been formed in a pipe end 14 or a plurality of hat section 80 have been formed in a plurality of pipe ends 14, the inner walls (11a, 11b) of the hollow structure may be lined in accordance with a method already elucidated above. Liner material is thereto provided through the access opening 16 and inside the hollow structure 12 while providing curable surfaces of the liner material for adhering to the hat section 80, in particular the hat rim part 80-1. An inflatable bladder is provided within the hollow of the structure and the bladder and the liner material are inflated against the wall of the hollow structure and the hat section. A curing means is then provided within the hollow of the structure, and the resin composition of the liner material sheets is cured to optionally adhere against the walls (11a, 11b) of the hollow structure and against the hat rim part 80-1 of the hat section 80.

## Claims

1. Packer (2) for use in a method of lining interior walls (11a, 11b) of a hollow structure (1) that communicates with a pipe (14) through an entrance opening (15) provided in a wall of the hollow (12) structure (1), the packer (2) comprising rigid end parts (20a, 20b) and a flexible part (21) that connects to the rigid end parts (20a, 20b), wherein the flexible part (21) comprises an inner covering layer (21a) facing the inside of the packer (2), an removable outer covering layer (21b) facing the outside of the packer (2), and a packer material sheet (22) of reinforcing fibers and a curable resin composition provided in between the inner and removable outer covering layer (21a, 21b) wherein the packer (2) further comprises a means for pressurizing the inside of the packer (2), and a curing means provided within the inside of the packer (2) for curing the resin composition of the packer material sheet (22), wherein the packer (2) further comprises spacing means (26) that keep the rigid parts (20a, 20b) at a distance from each other in an axial direction of the packer (2), wherein the spacing means (26) are configured to adjust the distance (27) between the rigid parts (20a, 20b).

2. Packer (2) according to claim 1, wherein one of the rigid end parts (20a, 20b) of the packer (2) is larger than the other rigid end part, whereby the smaller rigid end part is provided at the other end of the packer (2) than the larger rigid end part.

3. Packer (2) according to claim 2, wherein the rigid end parts (20a, 20b) are plate-like structures and the larger rigid end part has a larger transverse dimension than the smaller rigid end part.

4. Packer (2) according to claim 2 or 3, wherein the smaller rigid end part is configured to be insertable in an end of the pipe (14) that communicates with the hollow (12) structure (1) through an entrance opening (15) provided in the wall of the hollow (12) structure (1).

5. Packer (2) according to any one of the preceding claims, wherein the packer (2) curable resin composition is photo-curable and the packer (2) curing means comprises a source of UV-light (6), to which source a power line can be connected.

6. Packer (2) according to any one of the preceding claims, wherein at least the inner covering layer (21a) of the flexible part (21) is substantially permeable to the packer (2) curing means.

7. Packer (2) according to any one of the preceding claims, wherein at least the removable outer covering layer (21b) of the flexible part (21) is substantially impermeable to the packer (2) curing means.

8. Packer (2) according to any one of the preceding claims, wherein the inner covering layer (21a) comprises reinforcing fibers, at least in a connection area to the rigid parts (20a, 20b).

9. Method of providing a hat section to a pipe (14), wherein interior walls (11a, 11b) of a hollow structure (1) communicate with the pipe (14) through an entrance opening (15) provided in a wall of the hollow (12) structure (1), the method comprising
- providing an access opening (16) to the hollow (12) structure (1);
- plugging an upstream end of the pipe (14) with plugging means (40a, 40b) to prevent ingress of water;
- optionally providing a clamping tool (7) inside the pipe (14) end and downstream of the plugging means (40a, 40b) and clamp the tool against the pipe (14) inner wall;
- providing a packer (2) in accordance with any one of the preceding claims with the removable outer covering layer (21b) removed inside the pipe (14)'s upstream end and downstream of the plugging means (40a, 40b) and the optional clamping means, such that a part of the packer (2) sticks out of the pipe (14) over some length to provide a rigid end part of the packer (2) within the hollow (12) structure (1);
- inflating the packer (2) to provide the packer material sheet (22) against a wall of the pipe (14) and deform the flexible part (21) of the packer (2) that sticks out of the pipe (14);
- adjusting the distance (27) between the rigid end parts (20a, 20b) of the packer (2) with the spacing means (26) to bring the rigid end part that is provided within the hollow (12) structure (1) towards the pipe (14) and the interior wall around the entrance opening (15), causing the flexible part (21) of the packer (2) that sticks out of the pipe (14) to deform into a mushroom shape between the rigid end part that is provided within the hollow (12) structure (1) and the interior wall around the entrance opening (15);
- activating the packer curing means to cure the resin composition of the packer material sheet (22) and harden the packer material sheet (22) to form the hat section.

10. Method according to claim 9, wherein a clamping tool (7) is provided inside the pipe (14) between the plugging means (40a, 40b) and the packer (2).

11. Method of lining interior walls (11a, 11b) of a hollow structure (1) that communicates with a pipe (14) through an entrance opening (15) provided in a wall of the hollow (12) structure (1), the method comprising:
- providing the pipe (14) with a hat section according to the method of any one of claims 9-10;
- providing liner material through the access opening (16) and inside the hollow (12) structure (1) while providing curable surfaces of the liner material for adhering to the hat section;
- providing an inflatable bladder within the hollow (12) of the structure and inflating the bladder and the liner material against the wall of the hollow (12) structure (1) and the hat section;
- providing a curing means within the hollow (12) of the structure; and
- curing the resin composition of the liner material sheet (22).

12. Method of fer lining interior walls (11a, 11b) of a hollow structure (1) that communicates with a pipe (14) through an entrance opening (15) provided in a wall of the hollow (12) structure (1), the method comprising
- providing an access opening (16) to the hollow (12) structure (1);
- plugging an upstream end of the pipe (14) with plugging means (40a, 40b) to prevent ingress of water;
- optionally providing a clamping tool (7) inside the pipe (14) end and downstream of the plugging means (40a, 40b) and clamp the tool against the pipe (14) inner wall;
- providing a packer (2) in accordance with any one of the preceding claims 1 to 8 with the removable outer covering layer (21b) removed inside the pipe's (14) upstream end and downstream of the plugging means (40a, 40b) and the optional clamping means, such that an end part of the packer (2) substantially covers the entrance opening (15);
- providing liner material sheet through the access opening (16) and inside the hollow (12) structure (1) while leaving the end part of the installed packer (2) uncovered;
- inflating the packer (2) to provide the packer material sheet (22) against a wall of the pipe (14);
- providing an inflatable bladder within the hollow (12) of the structure and inflating the bladder and the liner material against the wall of the hollow (12) structure (1);
- providing a curing means within the hollow (12) of the structure;
- curing the resin composition of the liner material sheet; and
- activating the packer curing means to cure the resin composition of the packer material sheet (22) and harden the packer material sheet (22).

13. Method according to claim 11 or 12, wherein a clamping tool (7) is provided inside the pipe (14) between the plugging means (40a, 40b) and the packer (2).

14. Method according to any one of claims 11-13, wherein the curable resin composition of the liner material sheet and/or the packer material sheet (22) are/is partially cured before providing them against the wall of the hollow (12) structure (1) and pipe (14) respectively.

15. Method according to any one of claims 11-14, wherein the hollow (12) structure (1) comprises an underground hollow structure (1), such as a sewerage pit.

16. Method according to any one of claims 11-15, wherein the liner resin composition is photo-curable and the liner curing means comprises a source of UV-light (6).

17. Method according to any one of claims 11-16, wherein the access opening (16) to the hollow (12) structure (1) is covered by a cover that is substantially impermeable to the packer (2) and/or liner curing means, in particular to UV-light.

## Patentansprüche

1. Aufblasbare Vorrichtung (2) zur Verwendung in einem Verfahren zum Verkleiden von Innenwänden (11a, 11b) einer Hohlstruktur (1), die mit einem Rohr (14) über eine in einer Wand der hohlen (12) Struktur (1) vorgesehenen Eintrittsöffnung (15) in Verbindung steht, wobei die aufblasbare Vorrichtung (2) starre Endteile (20a, 20b) und ein biegsames Teil (21) aufweist, der sich an die starren Endteile (20a, 20b) anschließt,
wobei der biegsame Teil (21) eine innere Deckschicht (21a) gegenüber der Innenseite der aufblasbaren Vorrichtung (2), eine lösbare äußere Deckschicht (21b) gegenüber der Außenseite der aufblasbaren Vorrichtung (2) sowie eine Materialbahn (22) der aufblasbaren Vorrichtung aus Verstärkungsfasern und einer härtbaren Harzzusammensetzung aufweist, die zwischen der inneren und der lösbaren äußeren Deckschicht (21a, 21b) vorgesehen ist, wobei die aufblasbare Vorrichtung (2) weiterhin ein Mittel zur Druckbeaufschlagung der Innenseite der aufblasbaren Vorrichtung (2) sowie ein Aushärtungsmittel aufweist, das in der Innenseite der aufblasbaren Vorrichtung (2) zur Aushärtung der Harzzusammensetzung der Materialbahn (22) der aufblasbaren Vorrichtung vorgesehen ist,
wobei die aufblasbare Vorrichtung (2) weiterhin Abstandseinrichtungen (26) aufweist, die die starren Teile (20a, 20b) in einer Achsrichtung der aufblasbaren Vorrichtung (2) in einem Abstand zueinander halten, wobei die Abstandseinrichtungen (26) dazu ausgeführt sind, den Abstand (27) zwischen den starren Teilen (20a, 20b) anzupassen.

2. Aufblasbare Vorrichtung (2) nach Anspruch 1, wobei eines der starren Endteile (20a, 20b) der aufblasbaren Vorrichtung (2) größer als das andere starre Endteil ist, wobei das kleinere starre Endteil an dem anderen Ende der aufblasbaren Vorrichtung (2) als das größere starre Endteil vorgesehen ist.

3. Aufblasbare Vorrichtung (2) nach Anspruch 2, wobei die starren Endteile (20a, 20b) aus plattenartigen Strukturen bestehen und das größere starre Endteil eine größere Querabmessung als das kleinere starre Endteil aufweist.

4. Aufblasbare Vorrichtung (2) nach Anspruch 2 oder 3, wobei das kleinere starre Endteil so ausgeführt ist, dass es in ein Ende des Rohres (14) einführbar ist, das mit der hohlen (12) Struktur (1) über eine in der Wand der hohlen (12) Struktur (1) vorgesehene Eintrittsöffnung (15) in Verbindung steht.

5. Aufblasbare Vorrichtung (2) nach einem der vorhergehenden Ansprüche, wobei die aushärtbare Harzzusammensetzung der aufblasbaren Vorrichtung (2) lichthärtbar ist und das Aushärtungsmittel der aufblasbaren Vorrichtung (2) eine UV-Lichtquelle (6) aufweist, an die eine Stromleitung angeschlossen werden kann.

6. Aufblasbare Vorrichtung (2) nach einem der vorhergehenden Ansprüche, wobei zumindest die innere Deckschicht (21a) des biegsamen Teils (21) im Wesentlichen durchlässig für das Aushärtungsmittel der aufblasbaren Vorrichtung (2) ist.

7. Aufblasbare Vorrichtung (2) nach einem der vorhergehenden Ansprüche, wobei zumindest die lösbare äußere Deckschicht (21b) des biegsamen Teils (21) im Wesentlichen undurchlässig für das Aushärtungsmittel der aufblasbaren Vorrichtung (2) ist.

8. Aufblasbare Vorrichtung (2) nach einem der vorhergehenden Ansprüche, wobei die innere Deckschicht (21a) zumindest in einem Verbindungsbereich mit den starren Teilen (20a, 20b) Verstärkungsfasern aufweist.

9. Verfahren zur Bereitstellung eines Hutabschnitts für ein Rohr (14), wobei Innenwände (11a, 11b) einer Hohlstruktur (1) mit dem Rohr (14) über eine in einer Wand der hohlen (12) Struktur (1) vorgesehene Eintrittsöffnung (15) in Verbindung stehen, wobei das Verfahren folgendes aufweist:
- Bereitstellen einer Zutrittsöffnung (16) zu der hohlen (12) Struktur (1);
- Verschließen eines stromaufwärtigen Endes des Rohres (14) mit Verschlussmitteln (40a, 40b), um das Eindringen von Wasser zu verhindern;
- wahlweise Bereitstellen eines Spannwerkzeugs (7) in dem Ende des Rohres (14) und stromabwärts der Verschlussmittel (40a, 40b) und Verspannen des Werkzeugs gegen die Innenwand des Rohres (14);
- Bereitstellen einer aufblasbaren Vorrichtung (2) nach einem der vorhergehenden Ansprüche, wobei die lösbare äußere Deckschicht (21b) in dem stromaufwärtigen Ende des Rohres (14) und stromabwärts der Verschlussmittel (40a, 30b) sowie der optionalen Spanneinrichtung derart entfernt ist, dass ein Teil der aufblasbaren Vorrichtung (2) über eine gewisse Länge aus dem Rohr (14) heraussteht, um ein starres Endteil der aufblasbaren Vorrichtung (2) innerhalb der hohlen (12) Struktur (1) vorzusehen;
- Aufblasen der aufblasbaren Vorrichtung (2), um die Materialbahn (22) der aufblasbaren Vorrichtung an einer Wand des Rohres (14) vorzusehen und das biegsame Teil (21) der aufblasbaren Vorrichtung (2), das aus dem Rohr (14) heraussteht, zu verformen;
- Anpassen des Abstandes (27) zwischen den starren Endteilen (20a, 20b) der aufblasbaren Vorrichtung (2) mit den Abstandseinrichtungen (26), um das starre Endteil, das in der hohlen (12) Struktur (1) vorgesehen ist, in Richtung des Rohres (14) und die Innenwand um die Eintrittsöffnung (15) herum zu bringen, wodurch sich das biegsame Teil (21) der aufblasbaren Vorrichtung (2), das aus dem Rohr (14) heraussteht, zwischen dem starren Endteil, das in der hohlen (12) Struktur (1) vorgesehen ist, und der Innenwand um die Eintrittsöffnung (15) herum zu einer Pilzform verformt;
- Aktivieren des Aushärtungsmittels der aufblasbaren Vorrichtung, um die Harzzusammensetzung der Materialbahn (22) der aufblasbaren Vorrichtung auszuhärten und die Materialbahn (22) der aufblasbaren Vorrichtung so zu härten, dass sich das Hutabschnitt ausbildet.

10. Verfahren nach Anspruch 9, wobei ein Spannwerkzeug (7) innerhalb des Rohres (14) zwischen den Verschlussmitteln (40a, 40b) und der aufblasbaren Vorrichtung (2) vorgesehen ist.

11. Verfahren zum Verkleiden von Innenwänden (11a, 11b) einer Hohlstruktur (1), die mit einem Rohr (14) über eine in einer Wand der hohlen (12) Struktur (1) vorgesehene Eintrittsöffnung (15) in Verbindung steht, wobei das Verfahren folgende Schritte aufweist:
- Bereitstellen des Rohres (14) mit einem Hutabschnitt nach dem Verfahren eines der Ansprüche 9-10;
- Bereitstellen von Verkleidungsmaterial durch die Zutrittsöffnung (16) und innerhalb der hohlen (12) Struktur (1), während gleichzeitig härtbare Oberflächen des Verkleidungsmaterials zum Anhaften an das Hutabschnitt bereitgestellt werden;
- Bereitstellen einer aufblasbaren Blase im Inneren des Hohlraums (12) der Struktur und Aufblasen der Blase und des Verkleidungsmaterials an der Wand der hohlen (12) Struktur (1) und des Hutabschnitts;
- Bereitstellen eines Aushärtungsmittels im Inneren des Hohlraums (12) der Struktur; sowie
- Aushärten der Harzzusammensetzung der Verkleidungsmaterialbahn (22).

12. Verfahren zum Verkleiden von Innenwänden (11a, 11b) einer Hohlstruktur (1), die mit einem Rohr (14) über eine in einer Wand der hohlen (12) Struktur (1) vorgesehene Eintrittsöffnung (15) in Verbindung steht, wobei das Verfahren folgende Schritte aufweist:
- Bereitstellen einer Zutrittsöffnung (16) zu der hohlen (12) Struktur (1);
- Verschließen eines stromaufwärtigen Endes des Rohres (14) mit Verschlussmitteln (40a, 40b), um das Eindringen von Wasser zu verhindern;
- Wahlweise Bereitstellen eines Spannwerkzeugs (7) in dem Ende des Rohres (14) und stromabwärts der Verschlussmittel (40a, 40b) und Verspannen des Werkzeugs gegen die Innenwand des Rohres (14);
- Bereitstellen einer aufblasbaren Vorrichtung (2) nach einem der vorhergehenden Ansprüche 1 bis 8, wobei die lösbare äußere Deckschicht (21b) in dem stromaufwärtigen Ende des Rohres (14) sowie stromabwärts der Verschlussmittel (40a, 40b) und der optionalen Spanneinrichtung derart entfernt ist, dass ein Endteil der aufblasbaren Vorrichtung (2) im Wesentlichen die Eintrittsöffnung (15) bedeckt;
- Bereitstellen einer Verkleidungsmaterialbahn durch die Zutrittsöffnung (16) und innerhalb der hohlen (12) Struktur (1), während gleichzeitig das Endteil der eingebauten aufblasbaren Vorrichtung (2) unbedeckt bleibt;
- Aufblasen der aufblasbaren Vorrichtung (2), um die Materialbahn (22) der aufblasbaren Vorrichtung an einer Wand des Rohres (14) bereitzustellen;
- Bereitstellen einer aufblasbaren Blase im Inneren des Hohlraumes (12) der Struktur und Aufblasen der Blase und des Verkleidungsmaterials an der Wand der hohlen (12) Struktur (1);
- Bereitstellen einer Aushärtungsmittels im Inneren des Hohlraumes (12) der Struktur;
- Aushärten der Harzzusammensetzung der Verkleidungsmaterialbahn; sowie
- Aktivieren des Aushärtungsmittels der aufblasbaren Vorrichtung, um die Harzzusammensetzung der Materialbahn (22) der aufblasbaren Vorrichtung auszuhärten und die Materialbahn (22) der aufblasbaren Vorrichtung zu härten.

13. Verfahren nach Anspruch 11 oder 12, wobei ein Spannwerkzeug (7) innerhalb des Rohres (14) zwischen den Verschlussmitteln (40a, 40b) und der aufblasbaren Vorrichtung (2) vorgesehen ist.

14. Verfahren nach einem der Ansprüche 11 bis 13, wobei die aushärtbare Harzzusammensetzung der Verkleidungsmaterialbahn und/oder der Materialbahn (22) der aufblasbaren Vorrichtung teilweise ausgehärtet werden/wird, bevor sie an der Wand der hohlen (12) Struktur (1) bzw. des Rohres (14) bereitgestellt werden/wird.

15. Verfahren nach einem der Ansprüche 11 bis 14, wobei die hohle (12) Struktur (1) eine unterirdische Hohlstruktur (1), wie z.B. eine Abwassergrube, aufweist.

16. Verfahren nach einem der Ansprüche 11 bis 15, wobei die Verkleidungsharzzusammensetzung lichthärtbar ist und das Verkleidungsaushärtungsmittel eine UV-Lichtquelle (6) aufweist.

17. Verfahren nach einem der Ansprüche 11 bis 16, wobei die Zutrittsöffnung (16) zu der hohlen (12) Struktur (1) durch eine Abdeckung bedeckt ist, die im Wesentlichen undurchlässig für die aufblasbare Vorrichtung (2) und/oder das Verkleidungsaushärtungsmittel, insbesondere für UV-Licht, ist.

## Revendications

1. Garniture d'étanchéité (2) pour l'utilisation dans un procédé de revêtement de parois intérieures (11a, 11b) d'une structure (1) creuse qui communique avec un tuyau (14) à travers une ouverture d'entrée (15) prévue dans une paroi de la structure (1) creuse (12), la garniture d'étanchéité (2) comprenant des parties d'extrémité rigides (20a, 20b) et une partie flexible (21) qui est reliée aux parties d'extrémité rigides (20a, 20b),
dans laquelle la partie flexible (21) comprend une couche de couverture intérieure (21a) tournée vers l'intérieur de la garniture d'étanchéité (2), une couche de couverture extérieure (21b) amovible tournée vers le côté extérieur de la garniture d'étanchéité (2), et
une feuille de matériau de garniture d'étanchéité (22) de fibres de renforcement et une composition de résine durcissable prévue entre la couche de couverture intérieure et extérieure (21a, 21b) amovible, dans lequel la garniture d'étanchéité (2) comprend en outre un moyen de mise sous pression de l'intérieur de la garniture d'étanchéité (2), et un moyen de durcissement prévu à l'intérieur de la garniture d'étanchéité (2) pour le durcissement de la composition de résine de la feuille de matériau de garniture d'étanchéité (22),
dans laquelle la garniture d'étanchéité (2) comprend en outre des moyens d'écartement (26) qui maintiennent les parties rigides (20a, 20b) à une distance l'une de l'autre dans une direction axiale de la garniture d'étanchéité (2), dans laquelle les moyens d'écartement (26) sont configurés pour ajuster la distance (27) entre les parties rigides (20a, 20b).

2. Garniture d'étanchéité (2) selon la revendication 1, dans laquelle une des parties d'extrémité rigides (20a, 20b) de la garniture d'étanchéité (2) est plus grande que l'autre partie d'extrémité rigide, moyennant quoi la partie d'extrémité rigide plus petite que la partie d'extrémité rigide plus grande est prévue sur l'autre extrémité de la garniture d'étanchéité (2).

3. Garniture d'étanchéité (2) selon la revendication 2, dans laquelle les parties d'extrémité rigides (20a, 20b) sont des structures à plaque et la partie d'extrémité rigide plus grande présente une dimension transversale plus grande que la partie d'extrémité rigide plus petite.

4. Garniture d'étanchéité (2) selon la revendication 2 ou 3, dans laquelle la partie d'extrémité rigide plus petite est configurée pour être insérable dans une extrémité du tuyau (14) qui communique avec la structure (1) creuse (12) à travers une ouverture d'entrée (15) prévue dans la paroi de la structure (1) creuse (12).

5. Garniture d'étanchéité (2) selon l'une quelconque des revendications précédentes, dans laquelle la composition de résine durcissable de garniture d'étanchéité (2) est photodurcissable et le moyen de durcissement de garniture d'étanchéité (2) comprend une source de lumière UV (6), à laquelle source peut être reliée une ligne d'alimentation.

6. Garniture d'étanchéité (2) selon l'une quelconque des revendications précédentes, dans laquelle au moins la couche de couverture intérieure (21a) de la partie flexible (21) est sensiblement perméable au moyen de durcissement de garniture d'étanchéité (2).

7. Garniture d'étanchéité (2) selon l'une quelconque des revendications précédentes, dans laquelle au moins la couche de couverture extérieure amovible (21b) de la partie flexible (21) est sensiblement imperméable au moyen de durcissement de garniture d'étanchéité (2).

8. Garniture d'étanchéité (2) selon l'une quelconque des revendications précédentes, dans laquelle la couche de couverture intérieure (21a) comprend des fibres de renforcement, au moins dans une zone de liaison avec les parties rigides (20a, 20b).

9. Procédé de fourniture d'une section de chapeau à un tuyau (14), dans lequel des parois intérieures (11a, 11b) d'une structure (1) creuse communiquent avec le tuyau (14) à travers une ouverture d'entrée (15) prévue dans une paroi de la structure (1) creuse (12), le procédé comprenant :
- la fourniture d'une ouverture d'accès (16) à la structure (1) creuse (12) ;
- le bouchage d'une extrémité amont du tuyau (14) avec des moyens de bouchage (40a, 40b) pour empêcher l'entrée d'eau ;
- en option la fourniture d'un outil de serrage (7) à l'intérieur de l'extrémité de tuyau (14) et en aval des moyens de bouchage (40a, 40b) et le serrage de l'outil contre la paroi intérieure de tuyau (14) ;
- l'équipement d'une garniture d'étanchéité (2) selon l'une quelconque des revendications précédentes avec la couche de couverture extérieure (21b) amovible retirée à l'intérieur de l'extrémité amont de tuyau (14) et en aval des moyens de bouchage (40a, 40b) et du moyen de serrage optionnel de sorte qu'une partie de la garniture d'étanchéité (2) sorte du tuyau (14) sur une certaine longueur pour fournir une partie d'extrémité rigide de la garniture d'étanchéité (2) à l'intérieur de la structure (1) creuse (12) ;
- le gonflage de la garniture d'étanchéité (2) pour fournir la feuille de matériau de garniture d'étanchéité (22) contre une paroi du tuyau (14) et déformer la partie flexible (21) de la garniture d'étanchéité (2) qui sort du tuyau (14) ;
- l'ajustement de la distance (27) entre les parties d'extrémité rigides (20a, 20b) de la garniture d'étanchéité (2) avec les moyens d'écartement (26) pour amener la partie d'extrémité rigide qui est prévue à l'intérieur de la structure (1) creuse (12) vers le tuyau (14) et la paroi intérieure autour de l'ouverture d'entrée (15), amenant la partie flexible (21) de la garniture d'étanchéité (2) qui sort du tuyau (14) à se déformer sous une forme de champignon entre la partie d'extrémité rigide qui est prévue à l'intérieur de la structure (1) creuse (12) et la paroi intérieure autour de l'ouverture d'entrée (15) ;
- l'activation du moyen de durcissement de garniture d'étanchéité pour durcir la composition de résine de la feuille de matériau de garniture d'étanchéité (22) et solidifier la feuille de matériau de garniture d'étanchéité (22) pour former la section de chapeau.

10. Procédé selon la revendication 9, dans lequel un outil de serrage (7) est prévu à l'intérieur du tuyau (14) entre les moyens de bouchage (40a, 40b) et la garniture d'étanchéité (2).

11. Procédé de revêtement de parois intérieures (11a, 11b) d'une structure (1) creuse qui communique avec le tuyau (14) à travers une ouverture d'entrée (15) prévue dans une paroi de la structure (1) creuse (12), le procédé comprenant :
- l'équipement du tuyau (14) avec une section de chapeau selon le procédé selon l'une quelconque des revendications 9 à 10 ;
- la fourniture du matériau de revêtement à travers l'ouverture d'accès (16) et à l'intérieur de la structure (1) creuse (12) tout en fournissant des surfaces durcissables du matériau de revêtement pour adhérer à la section de chapeau ;
- la fourniture d'une vessie gonflable à l'intérieur du creux (12) de la structure et le gonflage de la vessie et du matériau de revêtement contre la paroi de la structure (1) creuse (12) et la section de chapeau ;
- la fourniture d'un moyen de durcissement à l'intérieur du creux (12) de la structure ; et
- le durcissement de la composition de résine de la feuille de matériau de revêtement (22).

12. Procédé de revêtement de parois intérieures (11a, 11b) d'une structure (1) creuse qui communique avec un tuyau (14) à travers une ouverture d'entrée (15) prévue dans une paroi de la structure (1) creuse (12), le procédé comprenant :
- la fourniture d'une ouverture d'accès (16) à la structure (1) creuse (12) ;
- le bouchage d'une extrémité amont du tuyau (14) avec des moyens de bouchage (40a, 40b) pour empêcher l'entrée d'eau ;
- en option la fourniture d'un outil de serrage (7) à l'intérieur de l'extrémité de tuyau (14) et en aval des moyens de bouchage (40a, 40b) et le serrage de l'outil contre la paroi intérieure de tuyau (14) ;
- l'équipement d'une garniture d'étanchéité (2) selon l'une quelconque des revendications précédentes 1 à 8 avec la couche de couverture extérieure (21b) amovible retirée à l'intérieur de l'extrémité amont de tuyau (14) et en aval des moyens de bouchage (40a, 40b) et des moyens de serrage optionnels de sorte qu'une partie d'extrémité de la garniture d'étanchéité (2) couvre sensiblement l'ouverture d'entrée (15) ;
- la fourniture d'une feuille de matériau de revêtement à travers l'ouverture d'accès (16) et à l'intérieur de la structure (1) creuse (12) tout en laissant la partie d'extrémité de la garniture d'étanchéité installée (2) non couverte ;
- le gonflage de la garniture d'étanchéité (2) pour fournir la feuille de matériau de garniture d'étanchéité (22) contre une paroi du tuyau (14) ;
- la fourniture d'une vessie gonflable à l'intérieur du creux (12) de la structure et le gonflage de la vessie et du matériau de revêtement contre la paroi de la structure (1) creuse (12) ;
- la fourniture d'un moyen de durcissement à l'intérieur du creux (12) de la structure ;
- le durcissement de la composition de résine de la feuille de matériau de revêtement ; et
- l'activation du moyen de durcissement de garniture d'étanchéité pour durcir la composition de résine de la feuille de matériau de garniture d'étanchéité (22) et solidifier la feuille de matériau de garniture d'étanchéité (22).

13. Procédé selon la revendication 11 ou 12, dans lequel un outil de serrage (7) est prévu à l'intérieur du tuyau (14) entre les moyens de bouchage (40a, 40b) et la garniture d'étanchéité (2).

14. Procédé selon l'une quelconque des revendications 11 à 13, dans lequel la composition de résine durcissable de la feuille de matériau de revêtement et/ou la feuille de matériau de garniture d'étanchéité (22) sont/est partiellement durcie(s) avant leur fourniture contre la paroi de la structure (1) creuse (12) et le tuyau (14) respectivement.

15. Procédé selon l'une quelconque des revendications 11 à 14, dans lequel la structure (1) creuse (12) comprend une structure (1) creuse souterraine telle qu'une fosse d'assainissement.

16. Procédé selon l'une quelconque des revendications 11 à 15, dans lequel la composition de résine de revêtement est photodurcissable et le moyen de durcissement de revêtement comprend une source de lumière UV (6).

17. Procédé selon l'une quelconque des revendications 11 à 16, dans lequel l'ouverture d'accès (16) à la structure (1) creuse (12) est couverte par un couvercle qui est sensiblement imperméable à la garniture d'étanchéité (2) et/ou au moyen de durcissement de revêtement, en particulier à la lumière UV.
